# EUROPÄISCHE PATENTSCHRIFT

(11) **EP 0 697 001 B1**
(45) Veröffentlichungstag und Bekanntmachung des Hinweises auf die Patenterteilung: **26.02.1997**
(21) Anmeldenummer: 94917623.4
(22) Anmeldetag: 11.05.1994
(51) Int. Cl.: B65D 83/00

(54) **NACHFÜLLPACKUNG**
REFILLABLE PACKAGE
EMBALLAGE RECHARGEABLE

(30) Priorität: 14.05.1993 DE 4316302; 10.01.1994 DE 4400442
(43) Veröffentlichungstag der Anmeldung: 21.02.1996
(73) Patentinhaber: Zeller Plastik GmbH, 56856 Zell (DE)
(72) Erfinder: KOEHN, Jochen, D-54516 Wittlich (DE); HEYN, Klaus, D-56856 Zell/Mosel (DE)
(74) Vertreter: VOSSIUS & PARTNER
(86) Internationale Anmeldenummer: EP9401533
(87) Internationale Veröffentlichungsnummer: WO9426624

(56) Entgegenhaltungen:
- EP-A- 0 492 009
- EP-A- 0 520 491
- DE-U- 9 211 396

## Beschreibung

Die Erfindung betrifft eine Nachfüllpackung mit einem Gehäuse und einem austauschbaren füllbaren Behälter, so daß bei einem Nachfüllen der Packung ein Umgießen bzw. Umschütten der Füllung vermieden wird. Auf diese Weise wird eine saubere, hygienische und verlustlose Nachfüllung gewährleistet.

Aus der US-A-4 469 250 ist eine Nachfüllpackung mit einem zusammendrückbaren Behälter und einem austauschbaren Beutel bekannt. Der Behälter besteht aus einem oberen und einem unteren Teil, die zusammengeschraubt den Beutel zwischen sich festklemmen. Außerdem weist der obere Teil ein erstes Rückschlagventil für die Ausgabe des Beutelinhalts und der untere Teil ein zweites Rückschlagventil für den Zufluß von Außenluft in den Raum zwischen dem Behälter und dem Beutel auf. Beim Entleeren wird der Behälter zusammengedrückt und die Füllung des Beutels über das erste Rückschlagventil herausgedrückt. Das durch den Füllungsverlust entstandene Vakuum im Behälter wird durch Luftzufuhr über das zweite Rückschlagventil ausgeglichen. Unterhalb der Behälterverschraubung hängt der Beutel frei im Behälter.

Die US-A-5 156 299 betrifft eine Nachfüllpackung, bestehend aus einem zweiteiligen Behälter mit einem manuellen Pumpkopf und einem austauschbaren Beutel. Die Seitenwände des Beutels weisen Rillen oder Faltungen auf, die mit der Beutelöffnung in Verbindung stehen und den Flüssigkeitstransport aus allen Bereichen des Beutels erleichtern sollen. Eine Verbindung des Beutels mit dem Behälter besteht nur im Bereich der Beutelöffnung.

Bei Nachfüllpackungen besteht eine Schwierigkeit in der gleichmäßigen Ausgabe der Füllung, da der Beutel im teilweise entleerten Zustand zum Zusammenklappen neigt und bei der Entleerung durch Luftdruck dadurch der Druck abfällt. Der dargestellte Stand der Technik versucht dieses Problem durch einen erhöhten technischen Aufwand zu lösen. So wird in der US-A-4 469 250 der Druckabfall durch das zweite Rückschlagventil ausgeglichen und die US-A-5 156 299 verwendet einen Pumpkopf und Flüssigkeitskanäle im Beutel.

Die DE-U-92 11 396.6 beschreibt eine Nachfüllpackung, deren austauschbarer Innenbeutel in axialem Abstand angeordnete Ringe oder eine Wendelfeder aufweist, die als Versteifungsstreben wirken sollen. Der Folienbeutel soll im Laufe seiner Entleerung kontrolliert axial, ziehharmonikaartig gefaltet werden.

Die EP-A-0 492 009 beschreibt einen Nachfüllbeutel, der an seiner Mantelfläche ein mit der Beutelinnenwandung zusammenwirkendes Führungsschild trägt, das als Stütze für die Beutelform während der zunehmenden Entleerung des Beutels wirkt.

Die EP-A-0 520 491 offenbart einen Nachfüllbehälter mit einem Beutel, dessen oberer Abschnitt über ein innenliegendes Stützteil verfügt.

Demgegenüber liegt der Erfindung die Aufgabe zugrunde, eine Nachfüllpackung mit einem Gehäuse und einem Austauschbehälter zur Verfügung zu stellen, die eine einfache und kostengünstige Konstruktion aufweist, und wobei ein Zusammenklappen des Behälters bei der Entleerung zuverlässig verhindert wird.

Vorteilhafterweise weist der erfindungsgemäße Behälter ein geringes Volumen und Gewicht auf, so daß ein geringer Abfall auftritt. Das Gehäuse ist mehrfach verwendbar und kann gegebenenfalls aufwendig konstruiert werden.

Die Aufgabe wird mit den Merkmalen des Kennzeichenteils des Patentanspruchs 1 gelöst.

Bei der Lösung geht die Erfindung von dem Grundgedanken aus, an der Außenwandung des Behälters mindestens eine Führung vorzusehen, die mit mindestens einer entsprechenden Halterung im Gehäuse im Eingriff steht. Auf diese Weise wird der Behälter auch im entleerten bzw. teilweise entleerten Zustand in seiner Position im Gehäuse stabilisiert und ein Kollabieren des Behälters verhindert. Somit kann der Behälter zuverlässig und vollständig entleert werden.

Der Vorteil der Erfindung liegt in einer einfachen und kostengünstigen Herstellbarkeit der Nachfüllpackung, in einer verbraucherfreundlichen Verwendbarkeit und einer vielseitigen Anwendbarkeit, z.B. für flüssige, pastöse oder pulverförmige Behälterfüllungen. Außerdem kann das Gehäuse einem schon jetzt bekannten Erscheinungsbild von Behältnissen ohne Innenbehälter angepaßt werden und diese ersetzen.

Im folgenden wird die Erfindung anhand der Zeichnungen näher erläutert. Es zeigen:
- Fig. 1: einen Querschnitt durch eine erfindungsgemäße Ausführungsform,
- Fig. 2: einen Querschnitt durch eine andere erfindungsgemäße Ausführungsform,
- Fig. 3: einen Querschnitt längs der Linie A-A' in Fig. 2,
- Fig. 3a: eine vergrößerte Abbildung des oberen Teils der erfindungsgemäßen Ausführungsform gemäß Fig. 3,
- Fig. 4: einen Querschnitt durch das Teil 1b gemäß Fig. 2,
- Fig. 5: eine Seitenansicht des Teils 1b mit Stegen gemäß Fig. 3,
- Fig. 6: eine Seitenansicht des Behälters gemäß Fig. 2,
- Fig. 7: eine Seitenansicht des Behälters gemäß Fig. 3,
- Fig. 8: eine Seitenansicht des Behälters gemäß Fig. 6, gehaltert auf dem Teil 1b gemäß Fig. 4,
- Fig. 8a: eine Seitenansicht eines Behälters, gehaltert auf dem Teil 1b, in einer anderen erfindungsgemäßen Ausführungsform,
- Fig. 9: eine Seitenansicht des gehalterten Behälters gemäß Fig. 8 senkrecht zur Zeichnungsebene,
- Fig. 10: eine Draufsicht auf den gehalterten Behälter gemäß Fig. 8,
- Fig. 11: einen Schnitt durch eine erfindungsgemäße Ausführungsform mit Füllstandserkennung,
- Fig.12a: einen Querschnitt durch eine weitere erfindungsgemäße Ausführungsform,
- Fig.12b: einen Querschnitt längs der Linie B-B' in Fig. 12a,
- Fig.12c: ein vergrößerter Ausschnitt aus Fig. 12c,
- Fig.13a: einen Querschnitt durch eine weitere erfindungsgemäße Ausführungsform mit in die Gehäusewand integrierten Führungen für den Behälter,
- Fig.13b: einen Querschnitt durch eine weitere erfindungsgemäße Ausführungsform mit vom Gehäuseboden aufrechtstehenden Stegen als Führungen für den Behälter,
- Fig.13c: einen Querschnitt durch eine weitere erfindungsgemäße Ausführungsform mit einem Führungsring, der den Behälter nur teilweise umgibt.
- Fig.14a: einen Querschnitt durch eine weitere erfindungsgemäße Ausführungsform,
- Fig.14b: ein vergrößerter Ausschnitt aus Fig. 14a,
- Fig.14c: einen Querschnitt durch Fig. 14b senkrecht zur Zeichnungsebene,
- Fig.15a: die erfindungsgemäße Ausführungsform gemäß Fig. 14a im zusammengesetzten Zustand,
- Fig.15b: eine Draufsicht auf die erfindungsgemäße Ausführungsform gemäß Fig. 15a,
- Fig.16a: eine Seitenansicht der erfindungsgemäßen Ausführungsform gemäß Fig. 15a im geschlossenen Zustand und mit geschnittenem Oberteil,
- Fig.16b: eine vergrößerte Darstellung des geschnittenen Bereiches in Fig. 16a,
- Fig.17a: die erfindungsgemäße Ausführungsform gemäß Fig. 15a im entnahmebereiten Zustand,
- Fig.17b: eine Draufsicht auf die erfindungsgemäße Ausführungsform gemäß Fig. 17a,
- Fig. 18: einen Querschnitt durch eine weitere erfindungsgemäße Ausführungsform,
- Fig.19a: einen Querschnitt durch eine weitere erfindungsgemäße Ausführungsform,
- Fig.19b: eine Draufsicht auf die erfindungsgemäße Ausführungsform gemäß Fig. 19a, wobei das Gehäuse senkrecht zur Zeichnungsebene geschnitten ist,
- Fig.19c: eine vergrößerte Darstellung von Fig. 19b,
- Fig.20a: den Behälter gemäß Fig. 19 in einer teilweise geschnittenen Seitenansicht, und
- Fig.20b: eine Vorderansicht parallel zur Zeichnungsebene auf die erfindungsgemäße Ausführungsform gemäß Fig. 20a.

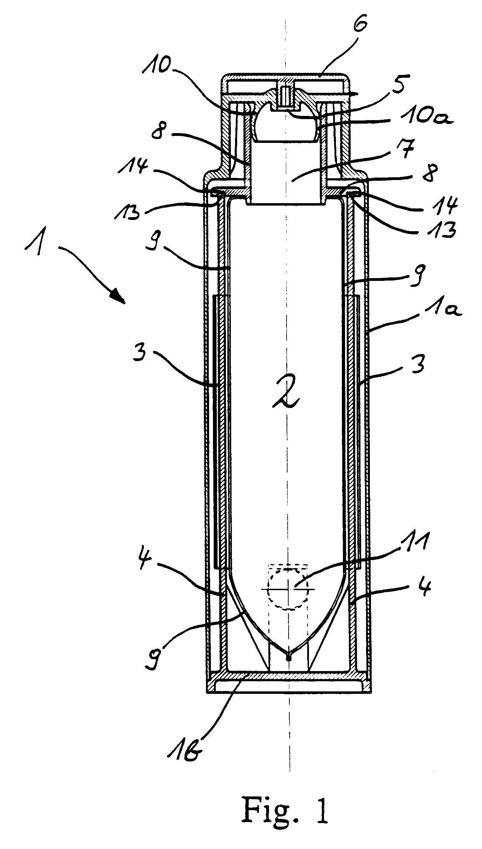

Fig. 1 zeigt einen Querschnitt durch eine erfindungsgemäße Ausführungsform der Nachfüllpackung, die im Querschnitt parallel zur Zeichnungsebene eine ovale Form mit zwei breiten und zwei schmalen Seiten aufweist. Der in Fig. 1 dargestellte Querschnitt verläuft durch die Mittelachse senkrecht zu den breiten Seiten eines äußeren Gehäuses 1. Ein Behälter 2 weist Schlaufen 3 auf, die über Stege 4 geschoben sind, und sitzt mit einem Flansch 8, der eine Behälteröffnung 7 umgibt, auf den oberen Enden 13 der Stege 4 in Ausnehmungen 14 auf. Das Gehäuse 1 weist einen ersten Teil 1a und eine zweiten Teil 1b auf, die über mindestens eine Einrasteinrichtung 11 (unterhalb bzw. oberhalb der Zeichenebene) lösbar miteinander verbunden sind. Das Teil 1a weist an seinem oberen Ende eine Ausgabeeinrichtung 5 für die Füllung, eine Verschlußkappe 6 und einen Stutzen 10 auf. Beim Verbinden der Teile 1a, 1b greift der Stutzen 10 in die Behälteröffnung 7 ein und dichtet diese durch eine Dichtung 10a gegen den Flansch 8 ab. Ist die Öffnung 7 des Behälters 2 vor dem Zusammenbau des Behälters 1 mit einer Folie bedeckt, so wird diese beim Verbinden der Gehäuseteile 1a, 1b durch den Stutzen 10 durchbrochen. Das Gehäuse 1 und der Behälter 2 sind vorzugsweise aus Kunststoff hergestellt, wobei das Gehäuse steif aber nachgiebig und der Behälter als Folienbeutel 9 ausgebildet ist. Zur Entleerung des Beutels 2 wird das Gehäuse 1 durch die Hand des Anwenders zusammengedrückt und der Druck auf den Beutel 2 übertragen, wodurch dessen Inhalt über die Ausgabeeinrichtung 5 bei geöffneter Verschlußkappe 6 entleert wird. Das zusammengedrückte Gehäuse 1 verformt in gewissem Umfang die Stege 4. Diese ziehen dann den Beutel 2 nach dem Loslassen des Gehäuses 1 wieder in seine Ausgangslage zurück, wodurch auch der Beutel 2 wieder belüftet wird.

Die erfindungsgemäße Konstruktion mit den in Halterungen eines Gehäuses geführten Beutel gestattet auch ein einfaches Ausgießen aus der Nachfüllpackung ohne Druckanwendung.

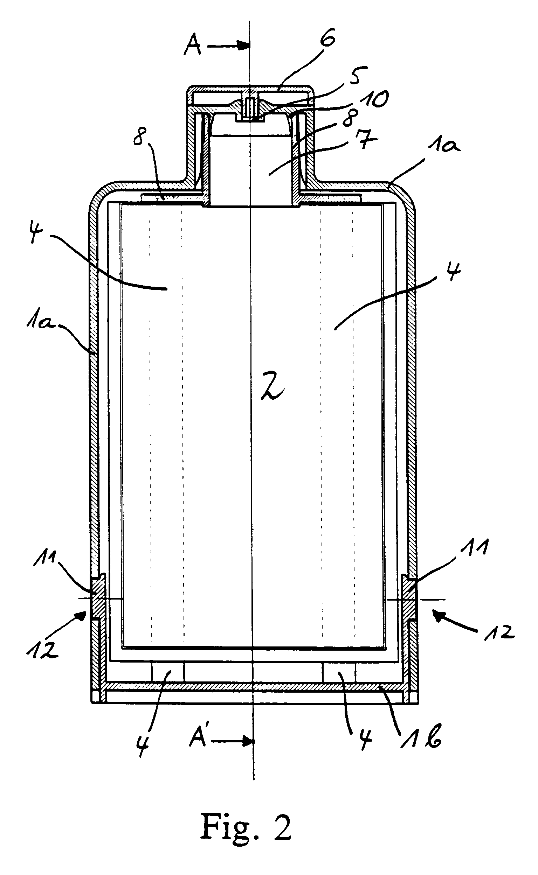

Fig. 2 zeigt eine bevorzugte Anordnung der Stege 4. Vorteilhafterweise werden diese an den breiten Seiten des Gehäuses 1 und außerhalb der Mitte angeordnet. Dadurch kann Druck über die Seiten des Gehäuses 1, die vorzugsweise im Druckbereich in ihrer Wandstärke geringer sind, ohne Beeinträchtigung durch die Stege 4 auf den Beutel 2 übertragen werden.

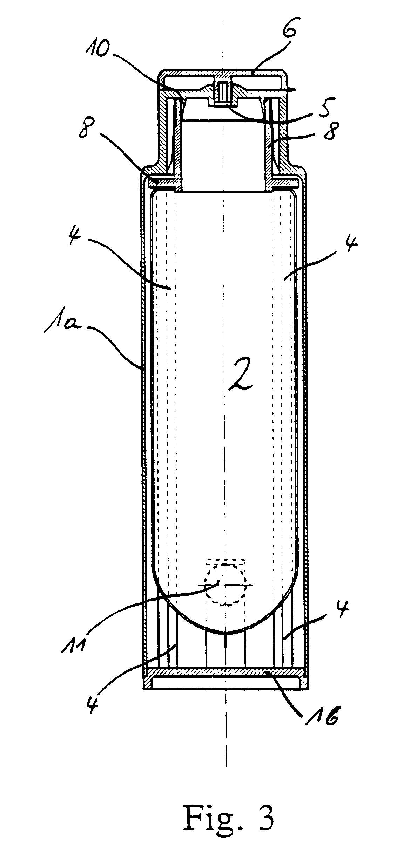

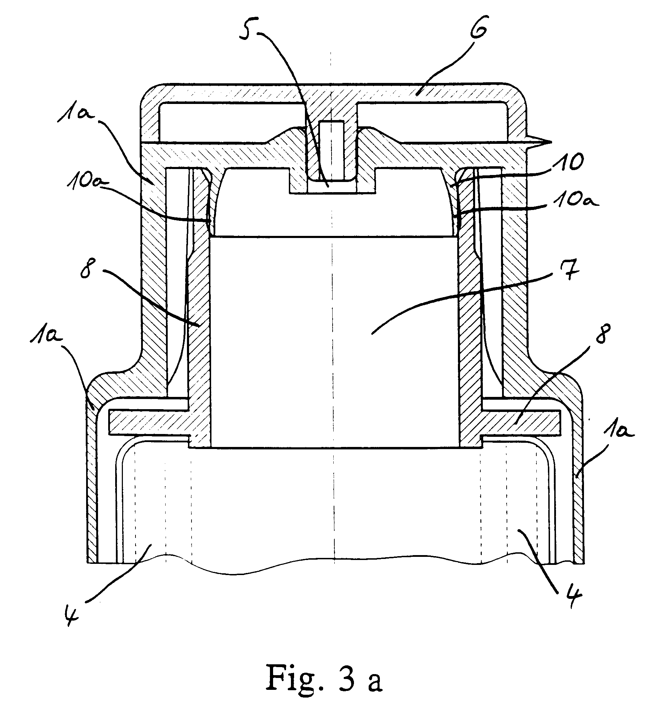

Fig. 3 zeigt einen Schnitt durch die Ausführungsform gemäß Fig. 2 längs der Linie A-A'.

Fig. 3a ist eine vergrößerte Darstellung des oberen Teils der Nachfüllpackung gemäß Fig. 3 mit dem Stutzen 10 und der Dichtung 10a.

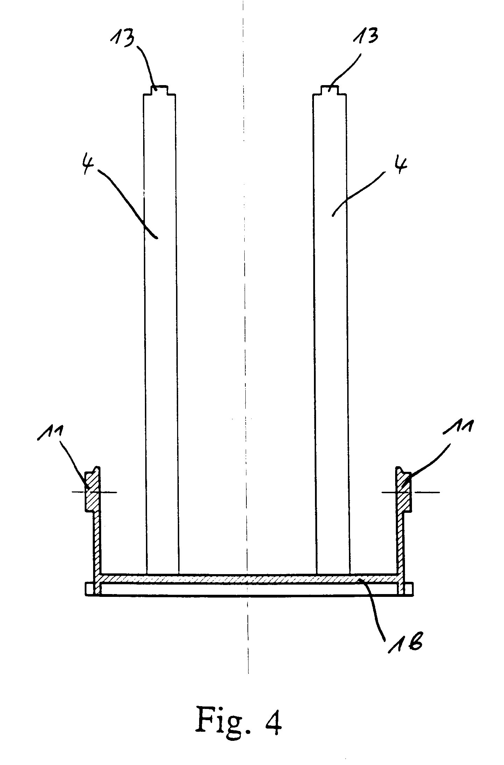

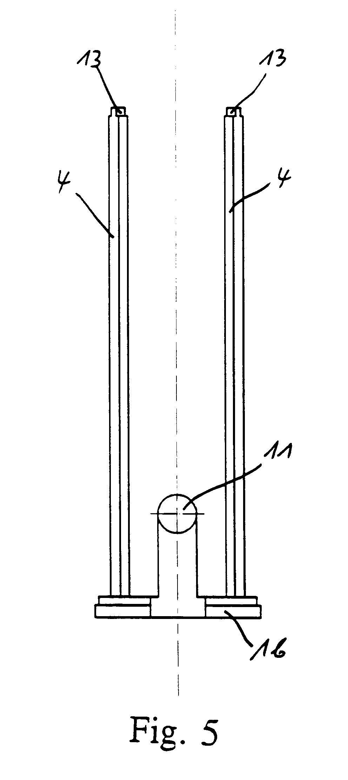

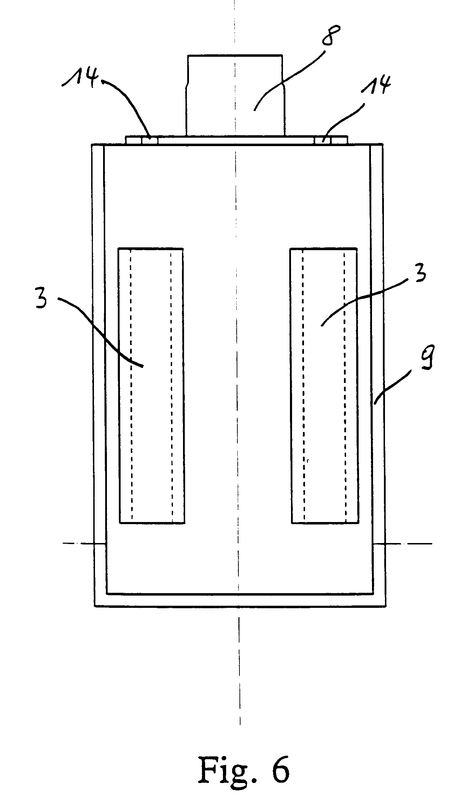

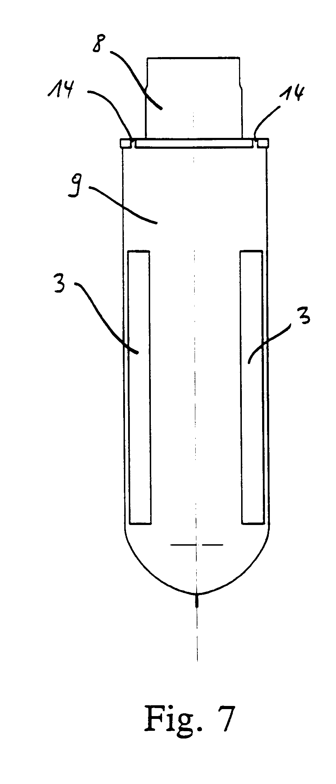

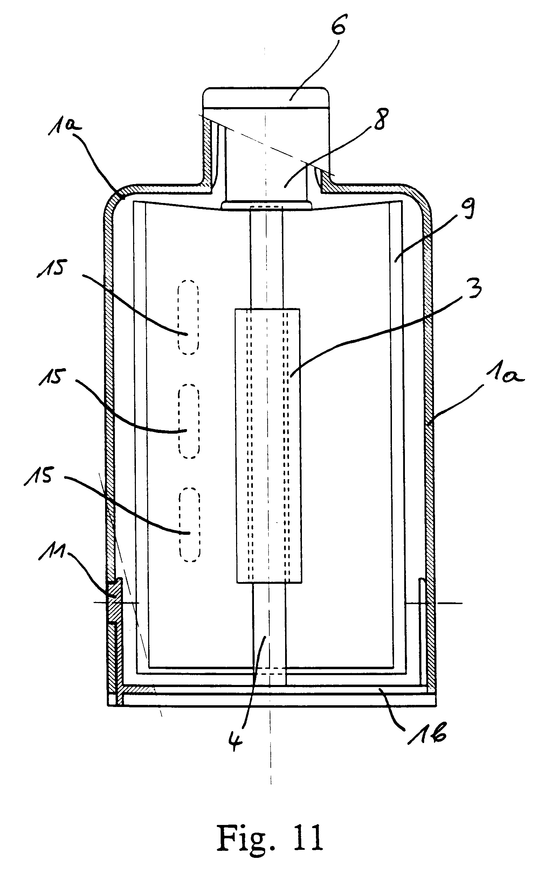

In den Figuren 4 und 5 ist das zweite Teil 1b des Gehäuses mit den Stegen 4 abgebildet, und die Figuren 6 und 7 zeigen entsprechende Abbildungen des dazu passenden Beutels 2 mit Schlaufen 3 für die Stege 4. Vorzugsweise besteht der Beutel aus einer an den Rändern miteinander verschweißten durchsichtigen Folie, wobei zur Sichtkontrolle des Füllstandes die Folie nur teilweise bedruckt ist. Die Schlaufen 3 werden vorzugsweise durch Schweißen an der Beutelhülle 9 angebracht. Außerdem, wie in Fig. 11 gezeigt ist, sind mehrere Sichtfenster 15 in der Seitenwand des Gehäuses 1 vorgesehen, die eine Füllstandskontrolle des Beutels 2 ermöglichen.

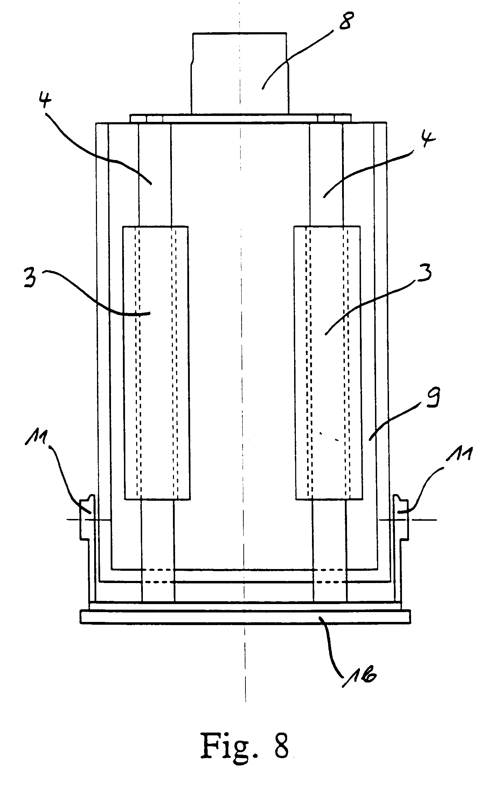

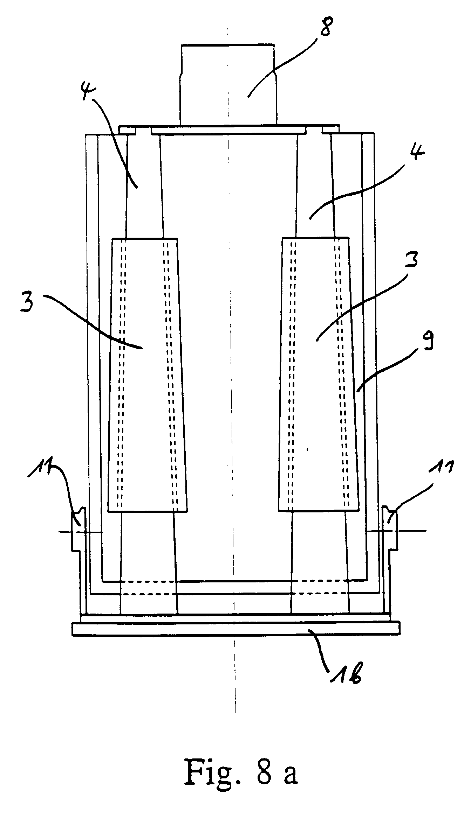

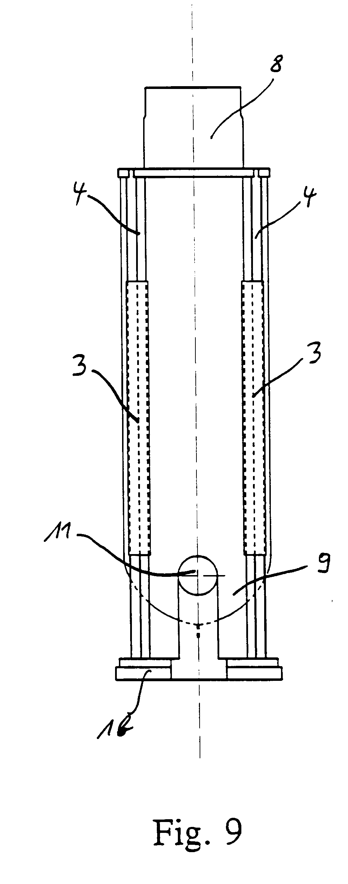

Die Figuren 8 und 9 zeigen den Beutel gemäß Figuren 6 und 7, gehaltert durch die Stege 4 auf dem zweiten Teil 1b, in der Vorder- und der Seitenansicht. Es sind zwei Einrasteinrichtungen 11 im zweiten Teil 1b ausgebildet. Die Vorsprünge der Einrasteinrichtungen stehen bei geschlossenem Gehäuse mit Löchern 12 im ersten Teil 1a des Behälters 1 in Eingriff (siehe auch Fig. 2). Durch Druck auf den elastisch gehalterten Vorsprung 11 läßt sich das Teil 1a leicht von dem Teil 1b lösen.

Fig. 8a zeigt eine andere erfindungsgemäße Ausführungsform der Halterung des Beutels 2 auf dem Teil 1b. Dabei sind sowohl die Stege 4 als auch die Schlaufen 3 sich nach oben verjüngend bzw. keilförmig ausgebildet. Auf diese Weise wird das Einsetzen des Beutels 2 auf das Teil 1b für den Anwender erleichtert.

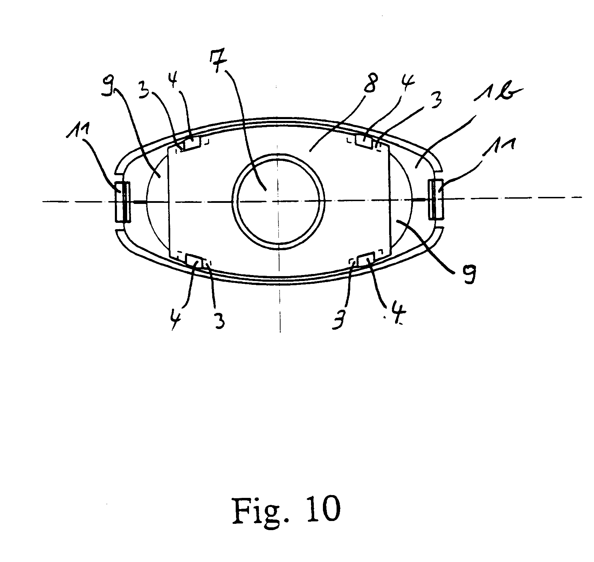

In Fig. 10 ist der gehalterte Beutel gemäß Figuren 8 und 9 in der Draufsicht abgebildet.

Fig. 11 zeigt einen Aufschnitt der erfindungsgemäßen Ausführungsform gemäß Fig. 1 senkrecht zur Zeichnungsebene. Die mit unterbrochenen Linien gezeichneten Langlöcher stellen in der Wand der Gehäuseseite 1a angeordnete Sichtfenster 15 dar, die die Kontrolle des Füllstandes in dem unterhalb der Sichtfenster 15 durchsichtig ausgebildeten Beutel 2 ermöglichen.

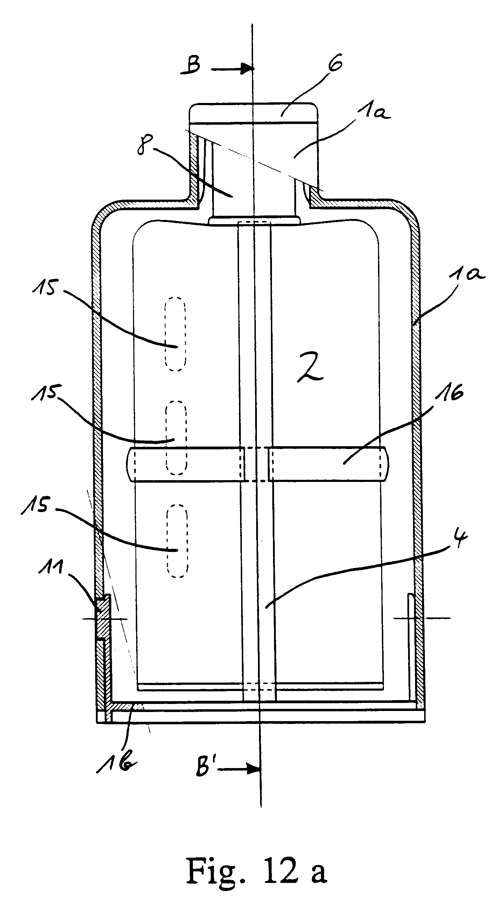

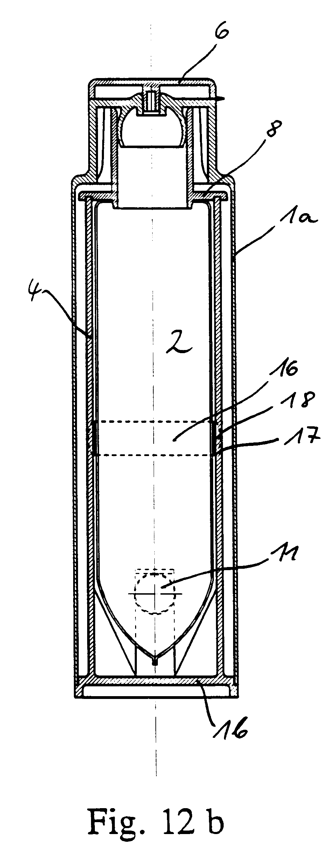

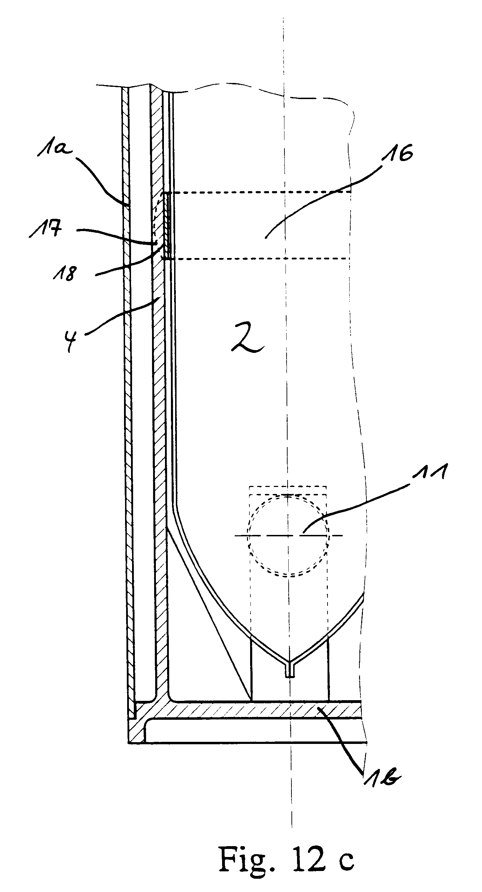

Die Figuren 12a bis d zeigen eine weitere erfindungsgemäße Ausführungsform.

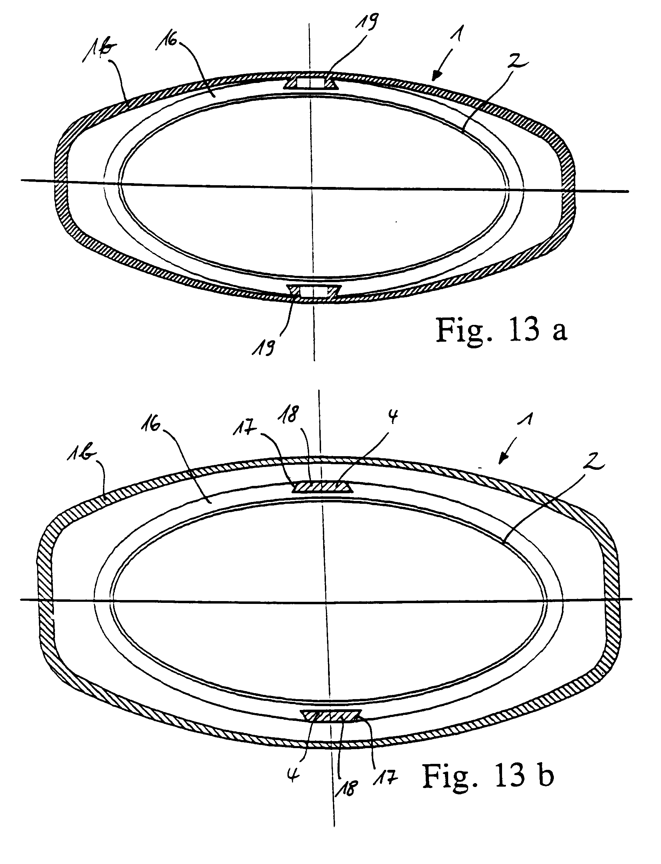

Fig. 12a zeigt die erfindungsgemäße Ausführungsform in aufgeschnittenem Zustand. Der Beutel 2 weist an seiner Außenseite einen angespritzten umlaufenden Ring 16 als Halterung auf, die in zwei Stegen 4 (nur einer ist sichtbar) geführt wird. Wie im Querschnitt (Fig. 13b) zu erkennen ist, weisen die auf den Gehäuseboden freistehenden Stege eine Schwalbenschwanzform 18 auf, wobei der Schwalbenschwanz 18 in Schwalbenschwanznuten 17 des Ringes 16 geführt wird. Fig. 12b zeigt einen Querschnitt längs der Linie B-B' in Fig. 12a. Bezüglich der weiteren Merkmale dieser Ausführungsform wird auf die vorstehende Beschreibung z.B. der Fig. 1 verwiesen. Fig. 12c zeigt einen vergrößerten Ausschnitt des Ringes 16 und der Schwalbenschwanzführung 17, 18 im Steg 4.

Die Figuren 13a bis c zeigen verschiedene erfindungsgemäße Ausführungsformen der Führung und Halterung des Beutels im Gehäuse.

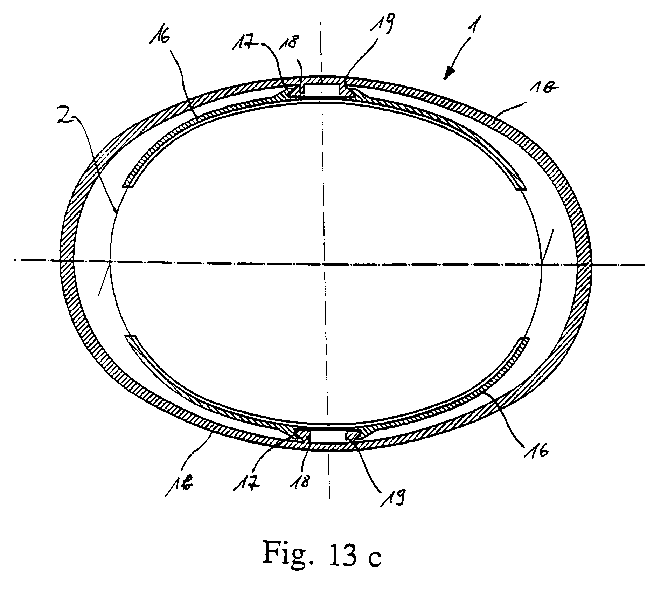

In Fig. 13a ist die Halterung des Beutels als integraler Bestandteil 19 der Behälterwand 1b ausgebildet. Die Einrichtung 19 weist im Querschnitt eine hohle Schwalbenschwanzform auf, die mit einer entsprechenden Nut im Ring 16 in Eingriff steht. Die hohle Schwalbenschwanzform gewährleistet ein elastisches Nachgeben beim Zusammendrücken der Gehäusewand. Fig. 13b zeigt eine alternative Halterung des Beutels im Gehäuse. Fig. 13c zeigt eine erfindungsgemäße Ausführungsform, bei der der Ring 16 in der Ausführungsform der Halterung gemäß Fig. 13a den Beutel 2 nur teilweise umgibt. Dadurch wird das Zusammendrücken des Beutels beim Entleeren erleichtert. Wie in den Ausführungsformen gemäß Figuren 1 bis 11, weisen die erfindungsgemäßen Ausführungsformen gemäß Figuren 13a bis 13c im Druckbereich des Gehäuses1 in Richtung seiner kürzeren Achse eine geringere Wandstärke auf, wodurch auch das Zusammendrücken des Gehäuses beim Entleeren des Beutels 2 erleichtert wird.

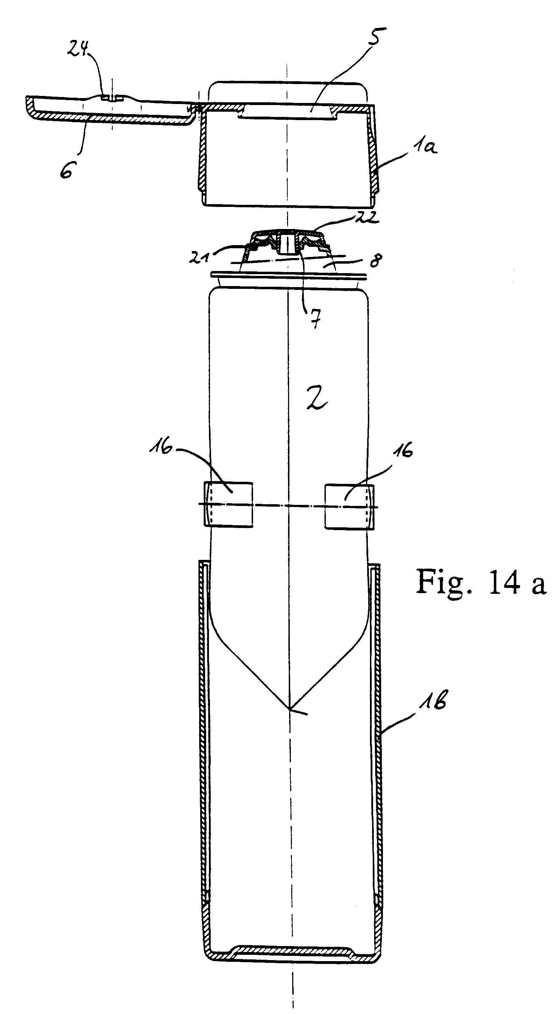

In den Figuren 14a bis 17b wird eine weitere erfindungsgemäße Ausführungsform beschrieben.

In dieser Ausführungsform umgibt der Ring 16 den Beutel 2 nicht vollständig (siehe Fig. 13c), und der Flansch 8, das erste Teil 1a und die Verschlußkappe 6 unterscheiden sich von den bisher dargestellten Ausführungsformen.

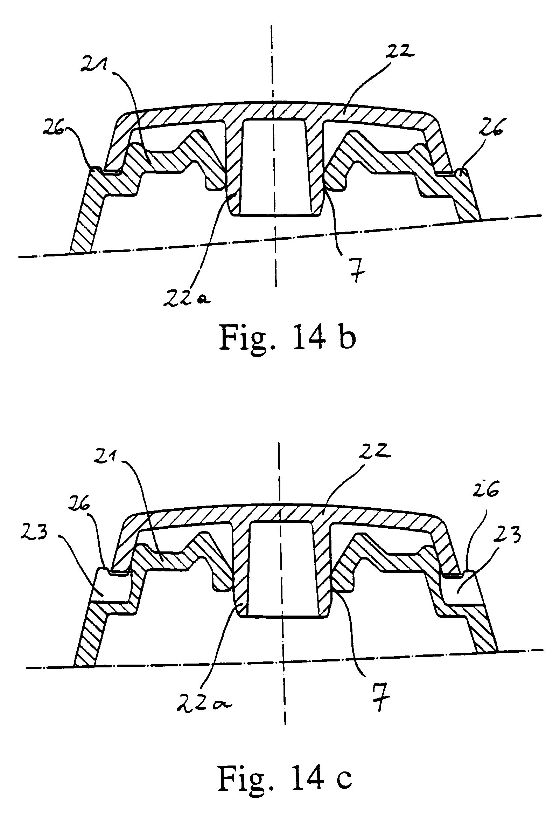

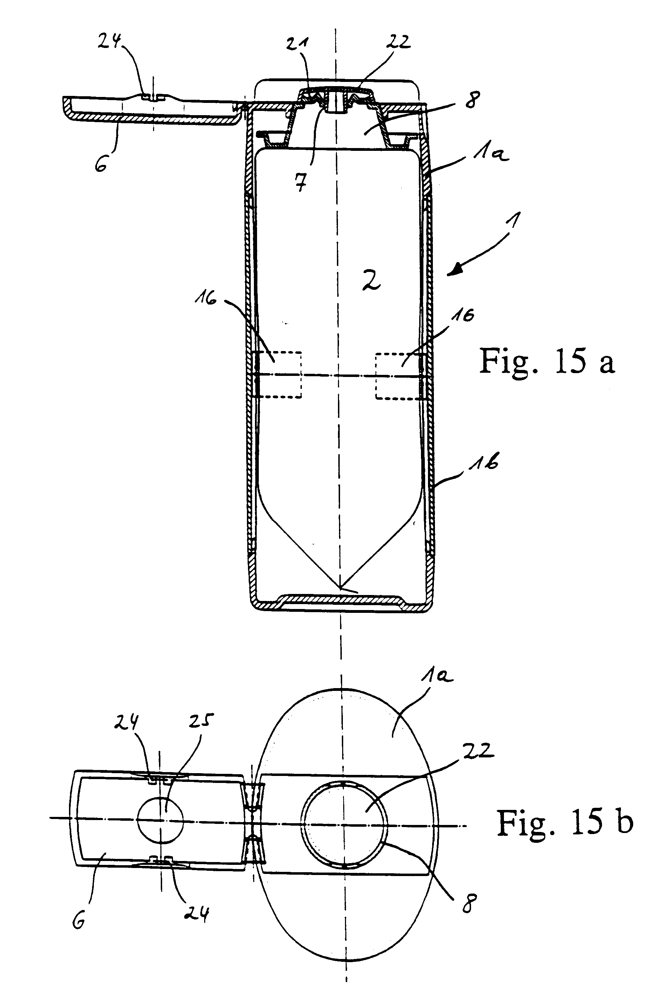

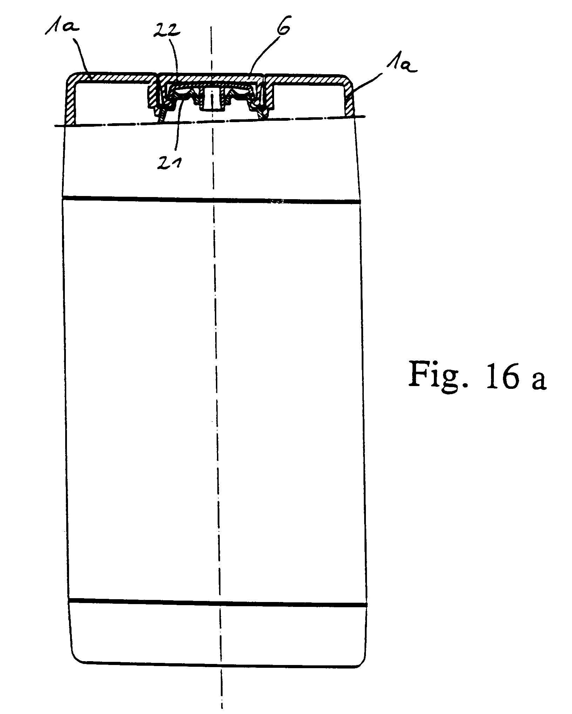

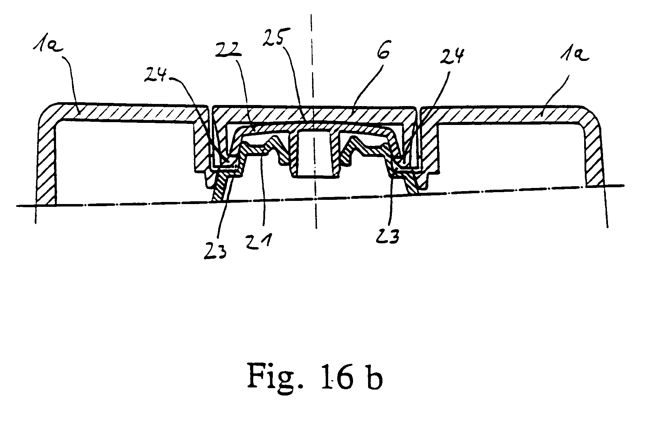

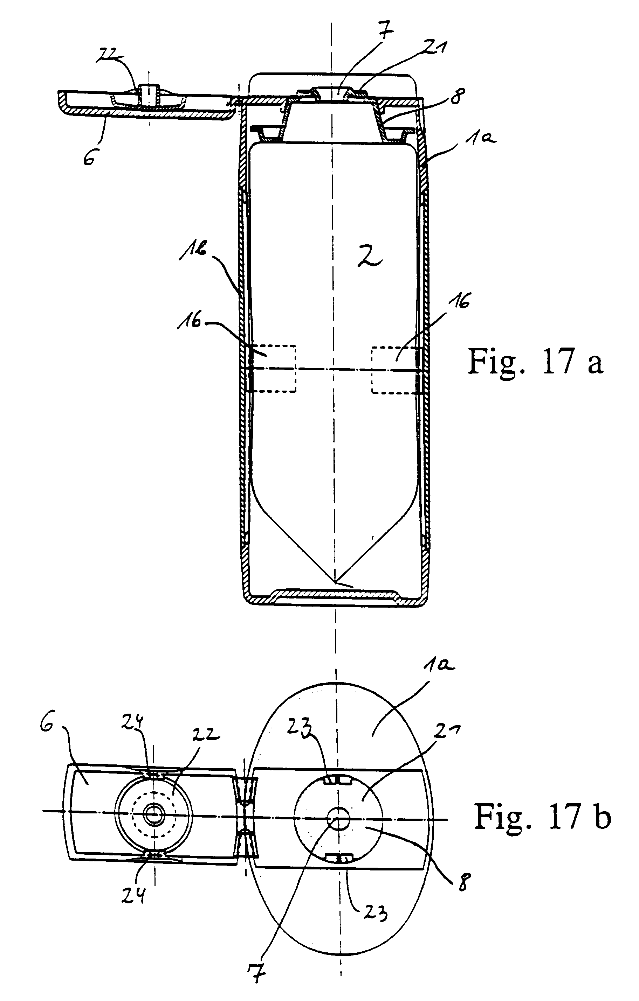

In Fig. 14a wird der Beutel und das Gehäuse im nicht zugesammengesetzten Zustand gezeigt. Der Beutel 2 wird mit Schwalbenschwanznuten am Ring 16 in mit dem zweiten Gehäuseteil 1b integral verbundene Schwalbenschwänze eingeführt, in das zweite Gehäuseteil 1b geschoben, und dann wird das Teil 1b mit dem ersten Gehäuseteil 1a verbunden. Der Flansch 8 weist an seinem oberen Ende eine Membran 21 mit der Entnahmeöffnung 7 auf, die vor der ersten Entnahme durch einen Einsatz 22 verschlossen ist. Dieser Einsatz 22 dient als Originalitätssicherung, die bei der ersten Öffnung des Beutels durch Haken 24 in der Verschlußkappe 6 erfaßt und entfernt wird. Fig. 14b zeigt eine vergrößerte Darstellung der Membran 21 und des Einsatzes 22 gemäß Fig. 14a. Die Membran 21 weist seitlich eine umlaufende Wulst 26 auf, die ein Abheben des Einsatzes 22 verhindert. Die Membran 21 drückt elastisch federnd gegen einen nach unten ragenden Stopfen 22a des Einsatzes 22 und dichtet so die Entnahmeöffnung 7 ab. Fig. 14c ist ein Querschnitt senkrecht zur Zeichnungsebene in Fig. 14b. In der Wulst 26 sind zwei sich gegenüberstehende kammartige Aussparungen 23 ausgebildet, in die bei geschlossener Verschlußkappe 6 die Haken 24 einrasten und so den Einsatz 22 hinterschnappen. Fig. 15a zeigt das Gehäuse 1 mit dem Beutel 2 in zusammengesetztem Zustand. Der Einsatz 22 verschließt die Öffnung 7, d.h. die Originalitätssicherung ist bei aufgeklappter Verschlußklappe 6 noch nicht entfernt. Fig. 15b zeigt eine Draufsicht auf die erfindungsgemäße Ausführungsform gemäß Fig. 15a. Beim Schließen des Deckels 6 wird der Einsatz 22 durch die Haken 24 hinterschnappt (Fig. 16a und vergrößerte Darstellung Fig. 16b). Die Wölbung des Einsatzes 22 liegt in einer entsprechenden Vertiefung 25 der Verschlußkappe 6. Durch Ankippen der z.B. mit Scharnieren am Teil 1a beweglich gehalterten Verschlußkappe 6 wird der Einsatz 22 aus der Öffnung 7 entfernt und gibt somit den Beutel 2 zur Erstentnahme frei. Dieser Zustand ist in Fig. 17a im Querschnitt und in der Draufsicht in Fig. 17b dargestellt. Der Einsatz 22 verbleibt, gehaltert durch die Haken 24, in der Verschlußkappe 6 und dichtet beim Schließen des Gehäuses 1 den Beutel 2 ab. Beim Einsetzen eines neuen Beutels 2 mit einem Einsatz 22 wird der alte Einsatz 22 aus der Verschlußkappe 6 durch seitliches Herausschieben entfernt, und der Vorgang des Abhebens der Originalitätssicherung in Form des Einsatzes 22 wiederholt sich wie vorher beschrieben, wobei der neue Einsatz 22 in der Verschlußkappe 6 verbleibt.

Der vorstehend beschriebene Flansch 8 kann erfindungsgemäß bei beliebigen Behältern verwendet werden.

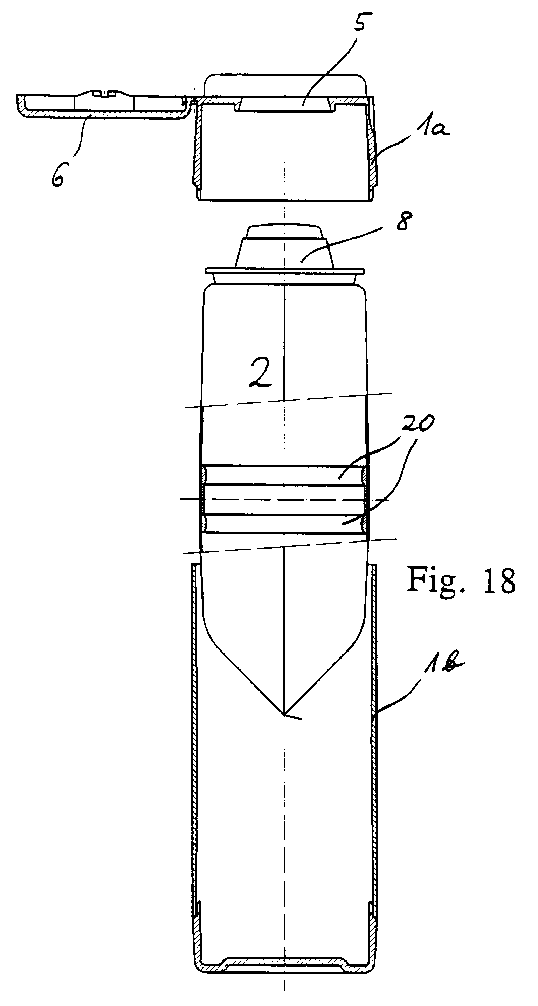

Fig. 18 zeigt eine weitere erfindungsgemäße Ausführungsform, wobei der Flansch 8 nur schematisch dargestellt ist, aber der Ausführungsform gemäß Figuren 15a bzw. b entspricht. Der Beutel 2 weist auf seiner Innenseite umlaufende Ringe 20 auf, die die Wand des Beutels aufspreizen und verstärken (in der Fig. 18 sind zwei Ringe gezeigt). Nach dem Einsetzen des Beutels 2 in das zweite Gehäuseteil 1b ergeben die Ringe 20 über die Wand des Beutels 2 einen Formschluß mit dem Gehäuse 1, wobei die Wand des Teils 1b als Halterung dient. Die Ringe 20 verhindern zuverlässig ein Zusammenklappen des leeren Beutels 2 und erlauben ein elastisches Zusammendrücken des Beutels 2 beim Entleeren. Alternativ kann der Beutel nur einen Ring aufweisen. Der oder die Ringe können offen sein und/oder schraubenlinienförmig verlaufen.

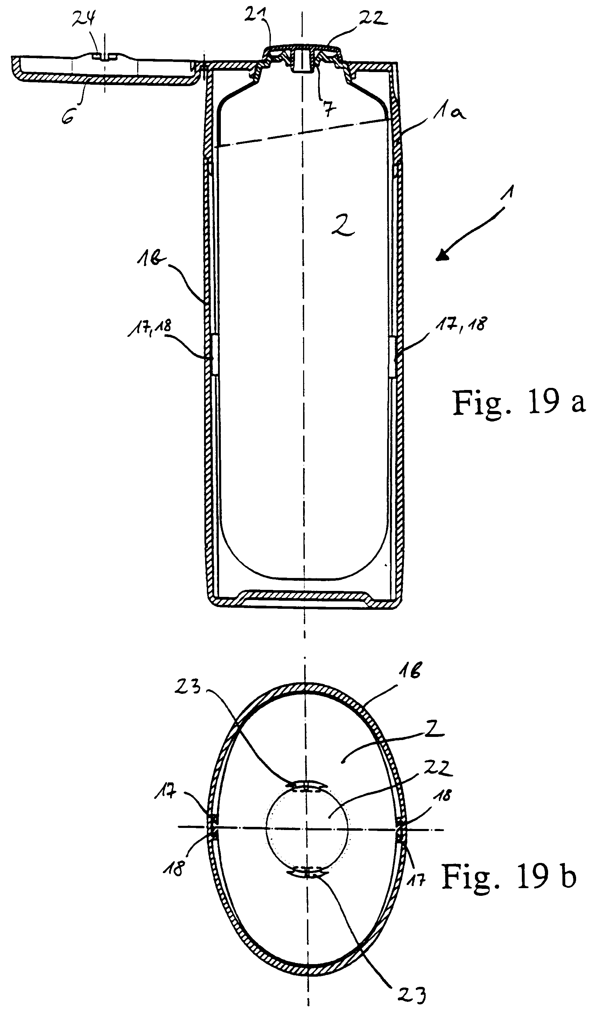

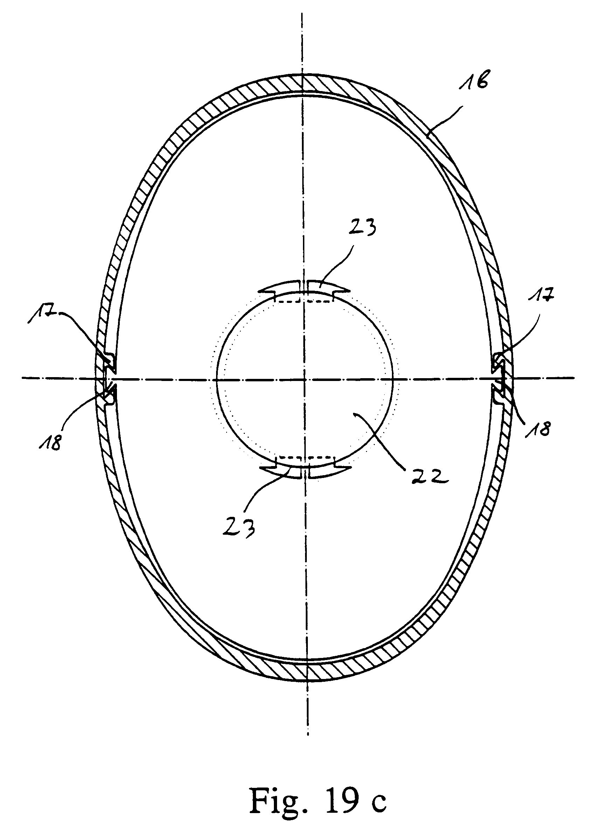

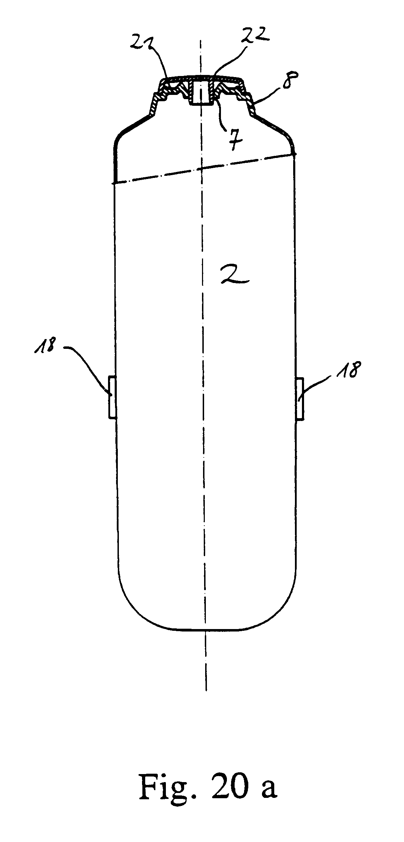

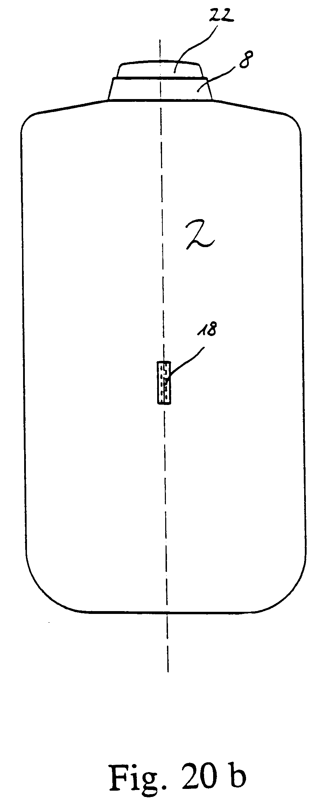

Die Figuren 19a bis c und 20a und b zeigen eine weitere erfindungsgemäße Ausführungsform.

Fig. 19a zeigt eine Nachfüllpackung, bei der der Behälter 2 selbsttragend und dünnwandig ausgebildet ist. Diese Art Behälter wird vorzugsweise geblasen, wodurch eine sehr geringe Wandstärke erreicht wird. Der Flansch 8 mit der Behälteröffnung 7 ist direkt an den Behälter 2 angeformt. Der Flansch 8 kann auch zweiteilig sein. Dabei ist zum besseren Befüllen des Behälters 2 erst eine große Bohrung vorgesehen, die dann von einem Zwischenring mit der Behälteröffnung 7 und dem Einsatz 22 verschlossen wird. Fig. 19b zeigt eine Draufsicht der erfindungsgemäßen Ausführungsform gemäß Fig. 19a, wobei das Gehäuse 1 aufgeschnitten ist. Fig. 19c zeigt eine vergrößerte Darstellung von Fig. 19b. An den Behälter 2 ist beidseitig ein Schwalbenschwanz 18 angeformt. Dieser wird beim Nachladen in am Gehäuseteil 1b angeformte Schwalbenschwanznuten 17 eingeführt und haltert so den Behälter 2 im Gehäuse 1. In Fig. 20a wird der Behälter 2 gemäß Figuren 19a bis c in einer teilgeschnittenen Seitenansicht dargestellt. Fig. 20b zeigt eine Vorderansicht auf die erfindungsgemäße Ausführungsform gemäß Fig. 20a parallel zur Zeichnungsebene. Die beidseitig angeordneten Schwalbenschwänze 18 können dabei unterschiedliche Längen aufweisen, wobei ein Schwalbenschwanz zu dem anderen auch in der Höhe versetzt angebracht sein kann. Auf diese Weise kann das Einführen des Behälters 2 in das Gehäuse 1 durch den Verbraucher erleichtert werden.

Bevorzugt ist die Nachfüllpackung für Behälter mit einem Rauminhalt von 125, 250 oder 500 ml vorgesehen. Es lassen sich jedoch auch Nachfüllpackungen für größere Behälter herstellen.

Die Nachfüllpackung kann für Getränke, Lebensmittel (z.B. Ketchup), Kosmetika, Waschmittel, Farben, Leime, Puder, Graphitpulver u.a. verwendet werden.

Die Erfindung kann vielfältige Modifikationen aufweisen. So können an Stelle der Schlaufen 3 am Behälter bzw. Beutel 2 Leisten vorgesehen sein, die mit Schienen anstelle der Stege 4 im Gehäuse in Eingriff stehen.

Es ist auch eine Ausführungsform möglich, bei der z.B. je ein Paar von Schlaufen 3 und Stegen 4 im größten Abstand voneinander quasi diagonal gegenüberliegend angeordnet sind.

Durch einen geeigneten Verschluß, z.B. mit einer breiteren Öffnung senkrecht oberhalb der Behälteröffnung 7, läßt sich der Inhalt des Behälters 2 auch z.B. durch einen Strohhalm absaugen. Diese Ausführungsform kann z.B. bei Verwendung als Trinkgarnitur, gefüllt mit Milch, Fruchtsaft etc. zum Einsatz kommen. Durch die Möglichkeit, z.B. die Stege 4 in Gestaltung und Lage zu variieren, ist die Gestaltung des Gehäuses 1 sehr frei (Freeform) Man kann also das Gehäuse 1 wie eine jetzt bekannte Flasche ohne Behälter gestalten.

## Patentansprüche

1. Nachfüllpackung mit einem Gehäuse (1) und einem austauschbaren, füllbaren Behälter (2), wobei der Behälter (2) an seiner Außenwandung mindestens eine Führung (3; 16; 17; 18; 20) aufweist, mit mindestens einer entsprechenden Halterung (4; 17; 18; 19) im Gehäuse (1) in Eingriff steht, um ein Kollabieren des Behälters (2) beim Entleeren zu verhindern.

2. Nachfüllpackung nach Anspruch 1, dadurch gekennzeichnet, daß die Führung als mindestens ein den Behälter (2) ganz oder teilweise umgebender Ring (16) ausgebildet ist.

3. Nachfüllpackung nach Anspruch 1, dadurch gekennzeichnet, daß die Führung eine Schwalbenschwanznut (17) oder ein Schwalbenschwanz (18) ist, und die Halterung (4) ein Schwalbenschwanz (18) oder eine Schwalbenschwanznut (17) ist, die miteinander in Eingriff bringbar sind.

4. Nachfüllpackung nach einem der Ansprüche 1 bis 3, dadurch gekennzeichnet, daß die Halterungen Stege (4) im Gehäuse (1) oder Einrichtungen (19) in der Wand des Gehäuses (1) sind.

5. Nachfüllpackung nach Anspruche 2, dadurch gekennzeichnet, daß der Ring (16) an den Behälter (2) angespritzt oder angeschweißt ist.

6. Nachfüllpackung nach Anspruch 5, dadurch gekennzeichnet, daß der Ring (16) aus Kunststoff, vorzugsweise Polypropylen, besteht.

7. Nachfüllpackung nach Anspruch 1, dadurch gekennzeichnet, daß die Führung mindestens ein die Innenseite des Behälters (2) vollständig umgebender, vorzugsweise angespritzter oder angeschweißter Ring (20) ist, wobei die Halterung des Behälters (2) im Gehäuse (1) durch Formschluß ausgebildet ist.

8. Nachfüllpackung nach Anspruch 7, dadurch gekennzeichnet, daß der Ring (20) schraubenlinienförmig verläuft.

9. Nachfüllpackung nach einem der Ansprüche 1 bis 8, dadurch gekennzeichnet, daß
a) das Gehäuse (1) aufweist:
a₁) ein erstes Teil (1a) mit einer Ausgabeeinrichtung (5) und einer Verschlußkappe (6), und
a₂) ein zweites Teil (1b), das mit dem ersten Teil (1a) lösbar verbunden ist, und
b) das der Behälter (2) aufweist:
b₁) eine Öffnung (7), die von einem Flansch (8) umgeben ist, und
b₂) eine mit dem Flansch (8) verbundene Behälterhülle (9), wobei
c) bei entferntem ersten Teil (1a) des Gehäuses (1) der Behälter (2) mit der Führung in die Halterung (4) einschiebbar ist, und
d) danach das erste Teil (1a) mit dem zweiten Teil (1b) verbunden wird, wobei gleichzeitig eine dichte Verbindung zwischen der Ausgabeeinrichtung (5) mit dem Beutelinneren über die Behälteröffnung (7) hergestellt wird.

10. Nachfüllpackung nach Anspruch 1, dadurch gekennzeichnet, daß
a) das Gehäuse (1) aufweist:
a₁) ein erstes Teil (1a) mit einer Ausgabeeinrichtung (5) und einer Verschlußkappe (6), und
a₂) ein zweites Teil (1b), das mit dem ersten Teil (1a) lösbar verbunden ist, wobei sich mindestens zwei auf dem Boden des zweiten Teils (1b) aufrechtstehende Stege (4) als Halterungen für den Behälter (2) ins Innere des Gehäuses (1) erstrecken,
und
b) daß der Behälter (2) aufweist:
b₁) eine Öffnung (7), die von einem Flansch (8) umgeben ist, und
b₂) eine mit dem Flansch (8) verbundene Behälterhülle mit Schlaufen (3) als Führungen für die Stege (4),
wobei
c) bei entferntem ersten Teil (1a) des Gehäuses (1) der Behälter (2) mit den Schlaufen (3) über die Stege (4) geschoben und mit dem Flansch (8) bzw. mit von ihm ausgehenden Vorsprüngen auf die oberen Enden (13) der Stege (4) in Ausnehmungen (14) aufgesetzt wird, und
d) danach das erste Teil (1a) mit dem zweiten Teil (1b) verbunden wird, wobei gleichzeitig eine dichte Verbindung zwischen der Ausgabeeinrichtung (5) mit dem Behälterinneren über die Behälteröffnung (7) hergestellt wird.

11. Nachfüllpackung nach einem der Ansprüche 1 bis 10, dadurch gekennzeichnet, daß das Gehäuse (1) zusammendrückbar ist, so daß eine Füllung des Behälters (2) herausdrückbar ist.

12. Nachfüllpackung nach einem der Ansprüche 9 bis 11, dadurch gekennzeichnet, daß die Ausgabeeinrichtung (5) einen in die Öffnung (7) des Behälters (2) passenden Stutzen (10) aufweist, der beim Verbinden des ersten Teils (1a) mit dem zweiten Teil (1b) in die Öffnung (7) eingreift.

13. Nachfüllpackung nach Anspruch 12, dadurch gekennzeichnet, daß der Stutzen (10) beim Eingriff in die Öffnung (7) einen Behälterverschluß öffnet.

14. Nachfüllpackung nach Anspruch 12 oder 13, dadurch gekennzeichnet, daß der Stutzen (10) eine seitlich umlaufende Dichtung (10a) aufweist, die die Öffnung (7) gegen den Flansch (8) abdichtet.

15. Nachfüllpackung nach einem der Ansprüche 9 bis 14, dadurch gekennzeichnet, daß das erste Teil (1a) mit dem zweiten Teil (1b) am Boden des Gehäuses (1) verbunden wird.

16. Nachfüllpackung nach einem der Ansprüche 9 bis 14, dadurch gekennzeichnet, daß das erste Teil (1a) mit dem zweiten Teil (1b) am oberen Ende des Gehäuses (1) verbunden wird.

17. Nachfüllpackung nach einem der Ansprüche 9 bis 16, dadurch gekennzeichnet, daß das erste Teil (1a) mit dem zweiten Teil (1b) durch mindestens eine Einrasteinrichtung (11) verbunden wird.

18. Nachfüllpackung nach Anspruch 17, dadurch gekennzeichnet, daß die Einrasteinrichtung ein in der Wand des zweiten Teils (1b) federnd angeordneter Vorsprung (11) ist, der mit einem entsprechenden Loch (12) in der Wand des ersten Teils (1a) in Eingriff bringbar ist.

19. Nachfüllpackung nach einem der Ansprüche 1 bis 18, dadurch gekennzeichnet, daß sie aus Kunststoff besteht.

20. Nachfüllpackung nach einem der Ansprüche 1 bis 19, dadurch gekennzeichnet, daß das Gehäuse (1) eine im Querschnitt im wesentlichen ovale Form mit zwei breiten und zwei schmalen Seiten aufweist und daß die Breitseite eine dünnere Wandung als die Schmalseite aufweist.

21. Nachfüllpackung nach einem der Ansprüche 1 bis 20, dadurch gekennzeichnet, daß der Behälter (2) dünnwandig und selbsttragend oder ein Folienbeutel (9) ist.

22. Nachfüllpackung nach Anspruch 21, dadurch gekennzeichnet, daß der Folienbeutel (9) aus zwei rechteckigen miteinander verbundenen Folien besteht, vorzugsweise aus einer gefalteten und verschweißten Folie besteht.

23. Nachfüllpackung nach einem der Ansprüche 20 bis 22, dadurch gekennzeichnet, daß je zwei Stege (4) an den beiden breiten Gehäuseseiten außerhalb der Seitenmitte angeordnet sind, so daß über die breiten Gehäuseseiten ohne Berührung der Stege (4) Druck auf den Behälter (2) ausgeübt werden kann.

24. Nachfüllpackung nach einem der Ansprüche 1 bis 23, dadurch gekennzeichnet, daß das Gehäuse (1) eine Füllstandserkennung aufweist und der Behälter (2) mindestens in einem sich von oben nach unten erstreckenden Bereich durch Aussparen einer evtl. Bedruckung durchsichtig ist.

25. Nachfüllpackung nach Anspruch 24, dadurch gekennzeichnet, daß das Gehäuse mehrere von oben nach unten angeordnete Sichtfenster (15) aufweist.

26. Nachfüllpackung nach einem der Ansprüche 1 bis 25, dadurch gekennzeichnet, daß die Ausgabeeinrichtung (5) und die Verschlußkappe (6) als separates Teil auf das Gehäuseteil (1a) montierbar ist.

27. Nachfüllpackung nach einem der Ansprüche 1 bis 26, dadurch gekennzeichnet, daß die Ausgabeeinrichtung (5) und die Verschlußkappe (6) auf dem Flansch (8) sitzt und vom Gehäuseteil (1a) gehalten wird.

28. Nachfüllpackung nach einem der Ansprüche 9 bis 27, dadurch gekennzeichnet, daß der Flansch (8) aufweist:
a) eine Membran (21), die die Öffnung (7) umgibt,
b) einen Einsatz (22) der federnd abgedichtet in die Öffnung (7) eingreift und diese verschließt, wobei
c) die Membran (22) einen seitlich umlaufenden Wulst (26) mit mindestens zwei kammartigen Aussparungen (23) aufweist, in die die Verschlußkappe (6) mit mindestens zwei Haken (24) unter dem Einsatz (22) einschnappbar ist, so daß
d) beim Öffnen der Verschlußkappe (6) der Einsatz (22) gemeinsam mit der Verschlußkappe (6) entfernt wird und die Öffnung (7) freigegeben wird.

29. Nachfüllpackung nach Anspruch 28, dadurch gekennzeichnet, daß die Verschlußkappe (6) eine Vertiefung (25) zur Aufnahme einer Auswölbung des Einsatzes (22) aufweist.

30. Nachfüllpackung nach einem der Ansprüche 9 bis 29, dadurch gekennzeichnet, daß die Ausgabeeinrichtung (5) ein mechanischer Sprüher oder eine Pumpe sein kann.

31. Nachfüllpackung nach einem der Ansprüche 1 bis 30; dadurch gekennzeichnet, das sie flüssige, pastöse oder pulverförmige Füllungen enthält.

32. Nachfüllpackung nach einem der Ansprüche 1 bis 31, dadurch gekennzeichnet, daß sie mit einem, vorzugsweise aufsetzbaren, Becher als Trinkgarnitur ausgestattet ist.

## Claims

1. A refillable package comprising a housing (1) and an exchangeable, fillable container (2), wherein said container (2) comprises at least one guide means (3; 16; 17; 18; 20) at its outer wall, which is in engagement with at least one corresponding mounting (4; 17; 18; 19) in said housing (1) so that said container (2) is prevented from collapsing when emptied.

2. The refillable package of claim 1, characterized in that the guide means is at least one ring (16) partly or completely surrounding said container (2).

3. The refillable package of claim 1, characterized in that the guide means is a dove-tail groove (17) or a dove tail (18) and the mounting (4) is a dove tail (18) or a dove-tail groove (17) which can be in engagement with one another.

4. The refillable package of any one of claims 1 to 3, characterized in that the mountings are bars (4) in said housing (1) or means (19) in the wall of said housing (1).

5. The refillable package of claim 2, characterized in that said ring (16) is injection-molded with or welded to said container (2).

6. The refillable package of claim 5, characterized in that said ring (16) is made of plastics, preferably polypropylene.

7. The refillable package of claim 1, characterized in that said guide means is at least one ring (20) completely surrounding the inside of said container (2), which ring is preferably injection-molded or welded, wherein the mounting of said container (2) in said housing (1) is formed by means of a form fit.

8. The refillable package of claim 7, characterized in that said ring (20) is of a helical shape.

9. The refillable package of any one of claims 1 to 8, characterized in that
a) said housing (1) comprises:
a1) a first part (1a) comprising a dispensing means (5) and a closure cap (6), and
a2) a second part (1b) detachably connected to the first part (1a), and
b) said container (2) comprises:
b1) an opening (7) surrounded by a flange (8), and
b2) a container envelope (9) connected to said flange (8), wherein
c) said container (2) can be pushed into said mounting (4) by means of said guide means when said first part (1a) of said housing (1) is removed, and
d) said first part (1a) is then connected with said second part (1b), with a sealed connection of said dispensing means (5) with the bag's interior being ensured via said container opening (7) at the same time.

10. The refillable package of claim 1, characterized in that
a) said housing (1) comprises:
a1) a first part (1a) comprising a dispensing means (5) and a closure cap (6), and
a2) a second part (1b) detachably connected to the first part (1a), wherein at least two bars (4) standing upright on the bottom of said second part (1b) serve as mountings for said container (2) and reach into the interior of said housing (1),
and
b) said container (2) comprises:
b1) an opening (7) surrounded by a flange (8), and
b2) a container envelope connected to said flange (8) comprising loops (3) as guide means for said bars (4),
wherein
c) said container (2) with said loops (3) can be pushed over said bars (4) and with the flange (8) and/or the protrusions protruding therefrom being positioned on the upper ends (13) of said bars (4) in recesses (14) when said first part (1a) of said housing (1) is removed, and
d) said first part (1a) is then connected with said second part (1b), with a sealed connection of said dispensing means (5) with the bag's interior being ensured via said container opening (7) at the same time.

11. The refillable package of any one of claims 1 to 10, characterized in that said housing (1) can be squeezed together so that the content of said container (2) can be squeezed out.

12. The refillable package of any one of claims 9 to 11, characterized in that said dispensing means (5) comprises a connection piece (10) fitting into said opening (7) of said container (2), which engages with said opening (7) when said first part (1a) is connected with said second part (1b).

13. The refillable package of claim 12, characterized in that said connection piece (10) opens a container closure upon being engaged with said opening (7).

14. The refillable package of claim 12 or 13, characterized in that said connection piece (10) comprises a seal (10a) which surrounds it laterally and seals said container opening (7) against the flange (8).

15. The refillable package of any one of claims 9 to 14, characterized in that said first part (1a) is connected to said second part (1b) at the bottom of said housing (1).

16. The refillable package of any one of claims 9 to 14, characterized in that said first part (1a) is connected to said second part (1b) at the top of said housing (1).

17. The refillable package of any one of claims 9 to 16, characterized in that said first part (1a) is connected to said second part (1b) via at least one locking means (11).

18. The refillable package of claim 17, characterized in that said locking means is a protrusion (11) elastically held in the wall of said second part (1b) which can be engaged with a corresponding hole (12) in the wall of said first part (1a).

19. The refillable package of any one of claims 1 to 18, characterized in that it is made of plastics.

20. The refillable package of any one of claims 1 to 19, characterized in that said housing (1) has an essentially oval cross-section with two wide and two narrow sides and that the wide side has a thinner wall than the narrow side.

21. The refillable package of any one of claims 1 to 20, characterized in that said container (2) is thin-walled and self-supporting or a film bag (9).

22. The refillable package of claim 21, characterized in that said film bag (9) consists of two rectangular pieces of film connected to one another, preferably of a folded and welded film.

23. The refillable package of any one of claims 20 to 22, characterized in that two bars (4) are located on each of the two wide housing sides outside the centers of each side such that pressure can be exerted on said container (2) via the wide housing sides without touching said bars (4).

24. The refillable package of any one of claims 1 to 23, characterized in that said housing (1) comprises a level control and said container (2) is transparent at least in one area stretching from top to bottom due to lack of any printing.

25. The refillable package of claim 24, characterized in that said housing comprises several transparent windows (15) located from top to bottom.

26. The refillable package of any one of claims 1 to 25, characterized in that said dispensing means (5) and said closure cap (6) can be mounted to said housing part (1a) as a separate part.

27. The refillable package of any one of claims 1 to 26, characterized in that said dispensing means (5) and said closure cap (6) are located on said flange (8) and are held by said housing part (1a).

28. The refillable package of any one of claims 9 to 27, characterized in that said flange (8) comprises:
a) a membrane (21) surrounding said opening (7),
b) an insert (22) engaged with said opening (7) in a resiliently sealed off manner and closing it off, wherein
c) said membrane (21) comprises a surrounding swelling (26) at its side with at least two comb-like recesses (23), into which said closure cap (6) can be snapped underneath said insert (22) by means of at least two hooks (24) so that
d) said insert (22) is removed together with said closure cap (6) when said closure cap (6) is opened, thus exposing said opening (7).

29. The refillable package of claim 28, characterized in that said closure cap (6) comprises an indentation (25) for accommodating a curvature of said insert (22).

30. The refillable package of any one of claims 9 to 29, characterized in that said dispensing means (5) can be a mechanical sprayer or a pump.

31. The refillable package of any one of claims 1 to 30, characterized in that it contains liquid, viscous or powdery substances.

32. The refillable package of any one of claims 1 to 31, characterized in that it is equipped with a cup, which can preferably be stuck on, as a drinking utensil.

## Revendications

1. Emballage rechargeable comportant un boîtier (1) et un récipient (2) échangeable et remplissable, dans lequel le récipient (2) présente sur sa paroi extérieure au moins un guidage (3 ; 16 ; 17 ; 18 ; 20) qui est en engagement dans le boîtier (1) par un moins une monture correspondante (4 ; 17 ; 18 ; 19), afin d'empêcher un écroulement du récipient (2) lors du vidage.

2. Emballage rechargeable selon la revendication 1, caractérisé en ce que le guidage est réalisé sous forme d'au moins un anneau (16) qui entoure entièrement ou en partie le récipient (2).

3. Emballage rechargeable selon la revendication 1, caractérisé en ce que le guidage est une gorge à queue d'aronde (17) ou bien une queue d'aronde (18), et en ce que la monture (4) est une queue d'aronde (18) ou bien une gorge à queue d'aronde (17), qui peuvent être amenées en engagement l'une avec l'autre.

4. Emballage rechargeable selon l'une quelconque des revendications 1 à 3, caractérisé en ce que les montures sont des barrettes (4) dans le boîtier (1) ou bien des organes (19) dans la paroi du boîtier (1).

5. Emballage rechargeable selon la revendication 2, caractérisé en ce que l'anneau (16) est injecté ou soudé contre le récipient (2).

6. Emballage rechargeable selon la revendication 5, caractérisé en ce que l'anneau (16) est constitué en matière plastique, de préférence en polypropylène.

7. Emballage rechargeable selon la revendication 1, caractérisé en ce que le guidage est au moins un anneau (20) qui est de préférence injecté ou soudé et qui entoure entièrement la face intérieure du récipient (2), et la monture du récipient (2) dans le boîtier (1) est réalisée par coopération de formes.

8. Emballage rechargeable selon la revendication 7, caractérisé en ce que l'anneau (20) s'étend en forme d'hélice.

9. Emballage rechargeable selon l'une quelconque des revendications 1 à 8, caractérisé en ce que
a) le boîtier (1) présente :
a1) une première partie (1a) comportant un dispositif distributeur (5) et un capuchon de fermeture (6), et
a2) une seconde partie (1b) qui est reliée de façon détachable à la première partie (1a), et en ce que
b) le récipient (2) présente :
b1) une ouverture (7) entourée par une bride (8), et
b2) une enveloppe de récipient (9) reliée à la bride (8), dans lequel
c) lorsque la première partie (1a) du boîtier (1) est enlevée, le récipient (2) peut être introduit par le guidage jusque dans la monture (4), et
d) ensuite, la première partie (1a) est reliée à la seconde partie (1b) en réalisant simultanément une liaison étanche entre le dispositif distributeur (5) et l'intérieur de la poche via l'ouverture de récipient (7).

10. Emballage rechargeable selon la revendication 1, caractérisé en ce que
a) le boîtier (1) présente :
a1) une première partie (1a) comportant un dispositif distributeur (5) et un capuchon de fermeture (6), et
a2) une seconde partie (1b) qui est reliée de façon détachable à la première partie (1a), et au moins deux barrettes (4) dressées verticalement sur le fond de la seconde partie (1b) et s'étendant sous forme de montures pour le récipient (2) vers l'intérieur du boîtier (1), et
b) le récipient (2) présente :
b1) une ouverture (7) qui est entourée par une bride (8), et
b2) une enveloppe de récipient reliée à la bride (8) et comportant des boucles (3) en tant que guidages pour les barrettes (4),
dans lequel
c) lorsque la première partie (1a) du boîtier (1) est enlevée, le récipient (2) comportant les boucles (3) est enfiché par dessus les barrettes (4) et est mis en place, avec la bride (8) ou avec les saillies qui partent de celle-ci, sur les extrémités supérieures (13) des barrettes (4) dans des évidements (14), et
d) ensuite, la première partie (1a) est reliée à la seconde partie (1b), en réalisant simultanément une liaison étanche entre le dispositif distributeur (5) et l'intérieur du récipient via l'ouverture de récipient (7).

11. Emballage rechargeable selon l'une quelconque des revendications 1 à 10, caractérisé en ce que le boîtier (1) peut être comprimé, de sorte qu'un remplissage du récipient (2) peut être extrait par compression.

12. Emballage rechargeable selon l'une quelconque des revendications 9 à 11, caractérisé en ce que le dispositif distributeur (5) présente un manchon (10) qui s'adapte dans l'ouverture (7) du récipient (2) et qui s'engage dans l'ouverture (7) lors de la liaison de la première partie (1a) avec la seconde partie (1b).

13. Emballage rechargeable selon la revendication 12, caractérisé en ce que le manchon (10) ouvre une fermeture de récipient lors de l'engagement dans l'ouverture (7).

14. Emballage rechargeable selon l'une ou l'autre des revendications 12 et 13, caractérisé en ce que le manchon (10) présente un joint d'étanchement (10a) périphérique latéral qui étanche l'ouverture (7) par rapport à la bride (8).

15. Emballage rechargeable selon l'une quelconque des revendications 9 à 14, caractérisé en ce que la première partie (1a) est reliée à la seconde partie (1b) sur le fond du boîtier (1).

16. Emballage rechargeable selon l'une quelconque des revendications 9 à 14, caractérisé en ce que la première partie (1a) est reliée à la seconde partie (1b) à l'extrémité supérieure du boîtier (1).

17. Emballage rechargeable selon l'une quelconque des revendications 9 à 16, caractérisé en ce que la première partie (1a) est reliée à la seconde partie (1b) par au moins un dispositif d'enclenchement (11).

18. Emballage rechargeable selon la revendication 17, caractérisé en ce que le dispositif d'enclenchement est une saillie (11) qui est agencée élastiquement dans la paroi de la seconde partie (1b) et qui peut être amenée en engagement avec un trou correspondant (12) dans la paroi de la première partie (1a).

19. Emballage rechargeable selon l'une quelconque des revendications 1 à 18, caractérisé en ce qu'il est constitué en matière plastique.

20. Emballage rechargeable selon l'une quelconque des revendications 1 à 19, caractérisé en ce que le boîtier (1) présente une forme à section transversale sensiblement ovale et comportant deux côtés larges et deux côtés étroits, et en ce que le côté large présente une paroi plus mince que le côté étroit.

21. Emballage rechargeable selon l'une quelconque des revendications 1 à 20, caractérisé en ce que le récipient (2) présente une paroi mince et est auto-porteur ou bien est une poche en film (9).

22. Emballage rechargeable selon la revendication 21, caractérisé en ce que la poche en film (9) est constituée par deux films rectangulaires reliés l'un à l'autre, de préférence par un film plié et soudé.

23. Emballage rechargeable selon l'une quelconque des revendications 20 à 22, caractérisé en ce que deux barrettes respectives (4) sont agencées sur les deux côtés larges du boîtier à l'extérieur du milieu du côté, de sorte qu'une pression peut être exercée sur le récipient (2) via les côtés larges du boîtier sans toucher les barrettes (4).

24. Emballage rechargeable selon l'une quelconque des revendications 1 à 23, caractérisé en ce que le boîtier (1) présente une détection de niveau de remplissage, et en ce que le récipient (2) est transparent dans au moins une région s'étendant depuis le haut vers le bas, par omission d'une impression éventuelle.

25. Emballage rechargeable selon la revendication 24, caractérisé en ce que le boîtier présente plusieurs fenêtres de vue (15) agencées depuis le haut vers le bas.

26. Emballage rechargeable selon l'une quelconque des revendications 1 à 25, caractérisé en ce que le dispositif distributeur (5) et le capuchon de fermeture (6) peuvent être montés comme pièce séparée sur la partie de boîtier (1a).

27. Emballage rechargeable selon l'une quelconque des revendications 1 à 26, caractérisé en ce que le dispositif distributeur (5) et le capuchon de fermeture (6) reposent sur la bride (8) et sont retenus par la partie de boîtier (1a).

28. Emballage rechargeable selon l'une quelconque des revendications 9 à 27, caractérisé en ce que la bride (8) présente :
a) un diaphragme (21) qui entoure l'ouverture (7),
b) un insert (22) qui s'engage en étanchement élastique dans l'ouverture (7) et qui referme celle-ci,
dans lequel
c) le diaphragme (21) présente un bourrelet périphérique latéral (26) comprenant au moins deux évidements en forme de peigne (23) dans lesquels peut s'enclencher le capuchon de fermeture (6) par au moins deux crochets (24) au-dessous de l'insert (22), de sorte que
d) lors de l'ouverture du capuchon de fermeture (6), l'insert (22) est enlevé conjointement avec le capuchon de fermeture (6), et l'ouverture (7) est libérée.

29. Emballage rechargeable selon la revendication 28, caractérisé en ce que le capuchon de fermeture (6) présente un renfoncement (25) pour recevoir un bombement de l'insert (22).

30. Emballage rechargeable selon l'une quelconque des revendications 9 à 29, caractérisé en ce que le dispositif distributeur (5) peut être un pulvérisateur mécanique ou bien une pompe.

31. Emballage rechargeable selon l'une quelconque des revendications 1 à 30, caractérisé en ce qu'il comporte des remplissages liquides, pâteux ou pulvérulents.

32. Emballage rechargeable selon l'une quelconque des revendications 1 à 31, caractérisé en ce qu'il est équipé d'un godet, de préférence à coiffer, en tant qu'accessoire pour boire.
